# EUROPEAN PATENT SPECIFICATION

(11) **EP 2 827 726 B1**
(45) Date of publication and mention of the grant of the patent: **30.03.2016**
(21) Application number: 13705312.0
(22) Date of filing: 31.01.2013
(51) Int. Cl.: A23P 10/30, A23L 35/00, A23L 33/12, A23L 33/115, A23L 2/52, A23L 2/66, A23L 2/68

(54) **AQUEOUS PRODUCT COMPRISING OIL-CONTAINING MICROCAPSULES AND METHOD FOR THE MANUFACTURE THEREOF**
WÄSSRIGES PRODUKT MIT ÖLHALTIGEN MIKROKAPSELN UND VERFAHREN ZUR HERSTELLUNG DAVON
PRODUIT AQUEUX COMPRENANT DES MICROCAPSULES CONTENANT DE L'HUILE ET PROCÉDÉ DE FABRICATION DE CELUI-CI

(30) Priority: 21.03.2012 US 201213425941
(43) Date of publication of application: 28.01.2015
(73) Proprietor: Pepsico, Inc., Purchase, NY 10577 (US)
(72) Inventor: GIVEN, Peter, S., Jr., Ridgefield, Connecticut 06877 (US); TROMP, Robert, Hans, NL-3524 CN Utrecht (NL)
(74) Representative: Duxbury, Stephen
(86) International application number: PCT/US2013/024111
(87) International publication number: WO 2013/141964

(56) References cited:
- EP-A1- 0 797 925
- EP-A1- 1 454 534
- EP-A1- 2 292 102
- WO-A1-03/045167
- US-B2- 7 888 459

## Description

### PRIORITY CLAIM

### TECHNICAL FIELD OF THE INVENTION

The present invention relates to the field of protecting a hydrophobic substance in an acidic aqueous system, more particularly microcapsules containing hydrophobic substances in acidic aqueous systems such as food products.

### BACKGROUND OF THE INVENTION

Certain hydrophobic substances are desirable as ingredients in food products, such as in, for example, beverages. In some cases such a hydrophobic substance does not have an acceptable taste or taste profile or is not sufficiently stable in an acidic environment. Examples of such hydrophobic substances include omega-3 fatty acids, water-insoluble flavorants, water-insoluble vitamins, etc. Certain hydrophobic substances have been discovered to have beneficial health effects. For example, omega-3 and omega-6 fatty acids form an important part of the human diet. Eicosapentaenoic acid (EPA) and docosahexaenoic acid (DHA), long-chain forms of omega-3 fatty acids, are understood in many cases to support brain and cardiovascular health and functions, amongst other health benefits. It has been suggested that consumption of omega-3 fatty acids should be increased.

Previously, hydrophobic substances have been incorporated directly into an aqueous system as a solution (with a compatible solvent), an extract, an emulsion, or a micellular dispersion (a so-called microemulsion). While all of these approaches serve to disperse the hydrophobic substance in an aqueous system, they do not provide extended protection against hydrolysis and oxidation. Commercially available fish oils, for example, can be high in omega-3 fatty acids, and in some cases are "encapsulated," but these commercially available fish oils have not proven adequately stable in all food contexts, e.g., physically or taste-stable in acidic food products. This can result in negative changes to the food product, such as unpleasant fishy flavors and aromas after ingestion, particularly a fishy aftertaste caused by belching fish oil from the stomach. Additionally, omega-3 fatty acids, as well as many water-insoluble flavorants, water-insoluble vitamins, etc. are unstable to degradation, e.g., by oxidation or hydrolysis, when exposed to air, water and/or light.

It would be desirable to provide edible compositions suitable for use in food products, which compositions incorporate one or more hydrophobic substances. It also would be desirable to provide food products incorporating such edible compositions. At least certain of the embodiments of the new compositions disclosed below can reduce or eliminate the unpleasant taste and odor of the one or more incorporated hydrophobic substances when used as an ingredient in a food product suitable for consumption by a human or animal. At least certain of the embodiments of the new compositions disclosed below provide hydrophobic substances in a stable form for use in aqueous systems such as food products. In at least some embodiments the hydrophobic substance is stable to oxidation and hydrolysis during the shelf life of the food product. In at least some embodiments the hydrophobic substance is stable to oxidation and hydrolysis in an acidic food product, e.g., a food product at pH less than pH 5.0 and in some cases less than pH 3.5. Additional features and advantages of some or all of the food products disclosed here will be apparent to those who are skilled in food technology given the benefit of the following summary and description of non-limiting examples.

EP 2292102 discloses a composition for delivering edible salts into food products via microcapsules comprising a protein-polysaccharide shell matrix and an edible salt containing active material

### SUMMARY

The invention is as defined in the claims.

Aspects of the invention are directed to delivery systems for hydrophobic substances which may be incorporated into food products, such as, for example, an acidic food product. By encapsulating a hydrophobic substance in microcapsules formed from polysaccharide glycated protein, one or more negative effects (e.g., oxidation, off flavor, unpleasant aroma, etc.) can be reduced or eliminated.

In one aspect, a food product is provided comprising an aqueous dispersion of microcapsules, wherein the microcapsules have at least one hydrophobic substance and a proteinaceous interface surrounding the at least one hydrophobic substance, wherein the proteinaceous interface comprises polysaccharide glycated protein, and the polysaccharide glycated protein comprises at least one protein residue and at least one polysaccharide residue, and a second food ingredient with the aqueous dispersion of microcapsules. Reference here to the proteinaceous interface being "around" the hydrophobic substance, and alternative terms used below, such as surround, microencapsulate, microcapsulate, etc. are used interchangeably and should be understood to mean that the proteinaceous interface effectively isolates or otherwise protects the hydrophobic substance (regardless whether or not it perfectly or completely surrounds the hydrophobic substance), e.g., for better taste profile, resistance to oxidation, resistance to hydrolysis and/or any combination of these or other purposes.

In certain embodiments, i.e., non-limiting examples or embodiments, of the delivery system, aqueous dispersion, and food product aspects disclosed here, the at least one polysaccharide residue of the polysaccharide glycated protein has a molecular weight of at least 5kDa, at least 200kDa, or no more than 1000kDa, and is selected from pullulan residue, dextran residue, guar gum residue, locust bean gum residue, tara gum residue, pectin residue, and combinations of any of them. In certain embodiments the at least one protein residue comprises at least one of whey protein residue, ovalbumine residue, lysozym residue, potato protein residue, soy protein residue, zein residue, and gluten residue. In certain embodiments the protein residue consists essentially of whey protein residue, ovalbumine residue, lysozym residue, potato protein residue, soy protein residue, zein residue, gluten residue or a combination of any of them. In certain embodiments the hydrophobic substance comprises or consists essentially of one or more lipids, water-insoluble vitamins, water-insoluble sterols, water-insoluble flavonoids, flavors, essential oils and combinations of any of them. In certain embodiments the at least one polysaccharide residue is a pullulan residue, the at least one protein residue is a whey protein residue, and the hydrophobic substance includes an omega-3 fatty acid. In certain embodiments the food product is a beverage, and in some embodiments the food product is an acidic beverage.

In a second aspect, a method is provided for preparing an aqueous dispersion of microcapsules comprising a) preparing a solution of a protein and a polysaccharide, b) freeze drying the solution of the protein and the polysaccharide (optionally referred to here, for convenience, as a protein/polysaccharide solution) to form a freeze dried product, c) heating the freeze dried product to form polysaccharide glycated protein, d) combining and homogenizing water, a hydrophobic substance, and the polysaccharide glycated protein into an emulsion with the polysaccharide glycated protein accumulating at or as a proteinaceous interface of the hydrophobic substance and the water, thereby producing a solution of microcapsules.

In certain embodiments of the method aspects disclosed, the solution of protein and polysaccharide comprises 10-20% of the protein and 10-25% of the polysaccharide. As used here all percentage values (unless expressly stated otherwise) are percent by weight of the entire composition or material referred to (e.g., in the preceding sentence, the entire "solution of protein and polysaccharide"). In certain such embodiments the solution of protein and polysaccharide is heated at 40-60°C, 40-80% relative humidity, for 24-48 hours to form the polysaccharide glycated protein. In certain embodiments the emulsion of polysaccharide glycated protein, water and hydrophobic substance has a pH of about pH 6.0 to pH 7.0.

In a third aspect, an aqueous dispersion of microcapsules is produced by a method comprising a) preparing a solution of a protein and a polysaccharide, b) freeze drying the solution of the protein and the polysaccharide, c) heating the freeze dried solution of the protein and the polysaccharide to form polysaccharide glycated protein, d) combining water, a hydrophobic substance, and the polysaccharide glycated protein and homogenizing, and e) allowing the polysaccharide glycated protein to accumulate at the interface of the hydrophobic substance and the water, thereby producing microcapsules.

In a fourth aspect, a microcapsule is provided having at least one hydrophobic substance and a layer around the at least one hydrophobic substance. The layer comprises polysaccharide glycated protein. The polysaccharide glycated protein comprises at least one protein residue and at least one polysaccharide residue.

In a fifth aspect, an aqueous dispersion of microcapsules is provided wherein the microcapsules have at least one hydrophobic substance and a layer around the at least one hydrophobic substance. The layer comprises polysaccharide glycated protein. The polysaccharide glycated protein comprises at least one protein residue and at least one polysaccharide residue.

In a sixth aspect, a food product is provided comprising microcapsules having at least one hydrophobic substance and a layer around the at least one hydrophobic substance, wherein the layer comprises polysaccharide glycated protein, and wherein the polysaccharide glycated protein comprises at least one protein residue and at least one polysaccharide residue.

In a seventh aspect, an aqueous dispersion of microcapsules is provided, wherein the microcapsules comprise at least one hydrophobic substance comprising omega-3 fatty acids, and a proteinaceous interface around the at least one hydrophobic substance, wherein the proteinaceous interface comprises polysaccharide glycated protein comprising at least one whey protein residue and at least one pullulan residue. In some embodiments the proteinaceous interface has a mean thickness of 0.005-10.0 µm.

In at least certain embodiments the microcapsules disclosed here (also referred to here in the alternative and interchangeably as oil-containing microcapsules, microcapsules containing hydrophobic substance, polysaccharide glycated protein based microcapsules, PGP based microcapsules, etc.) and food products incorporating them as an ingredient have been found to have unanticipated, desirable properties. For example, in certain such embodiments the polysaccharide glycated protein (PGP) based microcapsules can remain suspended in aqueous systems, e.g., beverages, beverage concentrates, etc., for a surprisingly long period of time. In certain such embodiments the PGP based microcapsules can remain suspended in acidic aqueous systems, e.g., beverages, beverage concentrates, etc. having a pH value less than pH 7.0 and in some cases less than pH 3.5, for a surprisingly long period of time. Furthermore, it was found that in at least some embodiments the PGP-containing interface layer effectively protects the hydrophobic substance in the microcapsules against oxidation and/or hydrolysis, etc.

These and other aspects, advantages and features of the present invention here disclosed will become apparent through reference to the following detailed description. Furthermore, it is to be understood that the features of the various embodiments described here are not mutually exclusive and exist in various combinations and permutations in other embodiments.

### BRIEF DESCRIPTION OF THE DRAWINGS

In the drawings, like reference characters generally refer to the same parts throughout the different views. Also, the drawing is not necessarily to scale, emphasis instead generally being placed upon illustrating the principles of the invention. In the following description, various embodiments of the present invention are described with reference to the following drawing, in which:

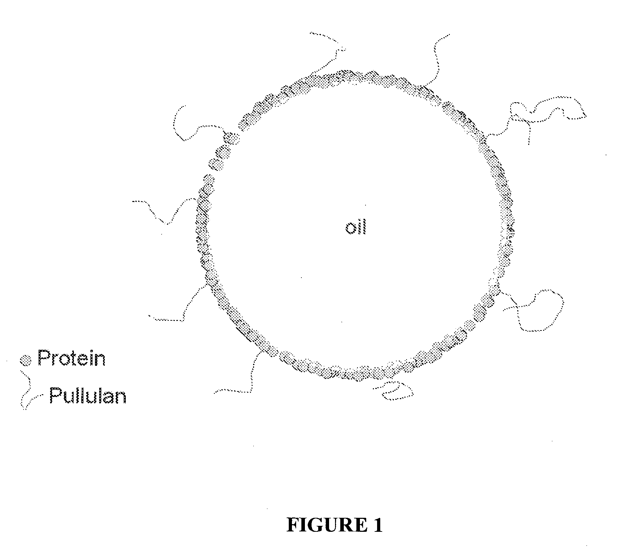

Figure 1 is a schematic of a microcapsule in accordance with one embodiment of the present invention.

### DETAILED DESCRIPTION OF THE INVENTION

Various examples and embodiments of the inventive subject matter disclosed here are possible and will be apparent to the person of ordinary skill in the art, given the benefit of this disclosure. In this disclosure reference to "certain exemplary embodiments" (and similar phrases) means that those embodiments are merely non-limiting examples of the inventive subject matter and that there likely are other alternative embodiments which are not excluded. Unless otherwise indicated or unless otherwise clear from the context in which it is described, alternative elements or features in the embodiments and examples below and in the Summary above are interchangeable with each other. That is, an element described in one example may be interchanged or substituted for one or more corresponding elements described in another example. Similarly, optional or non-essential features disclosed in connection with a particular embodiment or example should be understood to be disclosed for use in any other embodiment of the disclosed subject matter. More generally, the elements of the examples should be understood to be disclosed generally for use with other aspects and examples of the devices and methods disclosed here. A reference to a component or ingredient being operative, i.e., able to perform one or more functions, tasks and/or operations or the like, is intended to mean that it can perform the expressly recited function(s), task(s) and/or operation(s) in at least certain embodiments, and may well be operative to perform also one or more other functions, tasks and/or operations. While this disclosure includes specific examples, including presently preferred modes or embodiments, those skilled in the art will appreciate that there are numerous variations and modifications within the spirit and scope of the invention as set forth in the appended claims. Each word and phrase used in the claims is intended to include all its dictionary meanings consistent with its usage in this disclosure and/or with its technical and industry usage in any relevant technology area. Indefinite articles, such as "a," and "an" and the definite article "the" and other such words and phrases are used in the claims in the usual and traditional way in patents, to mean "at least one" or "one or more." The word "comprising" is used in the claims to have its traditional, open-ended meaning, that is, to mean that the product or process defined by the claim may optionally also have additional features, elements, etc. beyond those expressly recited. The phrase "consisting essentially of" is used to signal that the product or process defined necessarily includes the listed ingredients and is open to unlisted ingredients that do not materially affect the basic and novel properties of the invention.

Aspects of the invention relate to microcapsules disclosed here for hydrophobic substances, which provide a stable composition suitable for inclusion in food products, that is the microcapsules are stable for shelf-storage, for use in making food products, and for shelf-storage when included in acidic food products, etc. The microcapsules reduce or eliminate the unpleasant taste and odor of many hydrophobic substances such as fish oil, and reduce degradation, e.g. by oxidation or hydrolysis, of unstable hydrophobic substances. The microcapsules may be incorporated into a food product associated with health benefits, for example orange juice, to provide enhanced nutritional value. Additionally, the microcapsules may be incorporated into food products, for example carbonated soft drinks. By encapsulating such hydrophobic substances in microcapsules, possible negative visual and physical changes to the food product may be reduced or avoided. The resulting food product is appealing to the consumer, as well as being stable and having an adequate shelf life.

In certain embodiments microcapsules are provided in an aqueous dispersion. As used here an "aqueous dispersion" is defined as particles distributed throughout a medium of liquid water, e.g., as a suspension, a colloid, an emulsion, a sol, etc. The medium of liquid water may be pure water, or may be a mixture of water with at least one water-miscible solvent, such as, for example, ethanol or other alcohols, propylene glycol, glycerin, dimethylsulfoxide, dimethylformamide, etc. In certain embodiments there may be a substantial concentration of water-miscible solvent in the aqueous dispersion of the microcapsules, such as, at least 1% by volume, between about 1% and about 20% by volume, or no more than 20% by volume, for example 5%, 10%, or 15% by volume. In other embodiments the microcapsules are diluted into a food product and the concentration of water-miscible solvent is negligible.

As used here "microcapsule" is defined as a clearly identifiable discrete particle containing one or more hydrophobic substances, e.g. oil, water-insoluble vitamins, flavors, etc. that are enveloped by a proteinaceous interface, also referred to here as a proteinaceous interface layer, that separates said hydrophobic substances from the environment surrounding the particle. In certain embodiments there may be clearly identifiable discrete clusters (e.g. agglomerates) of the aforementioned particles.

As used here a "hydrophobic substance" refers to a water immiscible material such as an oil, a lipid, a water-insoluble vitamin (e.g. α-tocopherol), a water-insoluble sterol, a water-insoluble flavonoid, a flavor or an essential oil. The oil employed in accordance with the present invention can be a solid, a liquid or a mixture of both.

As used here a "lipid" encompasses any substance that contains one or more fatty acid residues, including free fatty acids. Thus, the term "lipid" encompasses, for instance, triglycerides, diglycerides, monoglycerides, free fatty acids, phospholipids or a combination of any of them.

As used here a "fatty acid" encompasses free fatty acids as well as fatty acid residues. Whenever reference is made here to a weight percentage of fatty acids, this weight percentage includes free fatty acids as well as fatty acid residues (e.g. fatty acid residues contained in triglycerides). Further, as used here a "polyunsaturated fatty acid" (PUFA) encompasses any fatty acid containing 2 or more double bonds in the carbon chain.

As used here a "polysaccharide glycated protein" or "PGP" is a molecule, that may be a true protein in which at least one polysaccharide residue is covalently or otherwise bonded to at least one protein residue. PGP is typically formed when sugars are cooked with proteins causing Browning reactions (usually Maillard type reactions). As used here "polysaccharide residue" refers to the part of the PGP that originates from a polysaccharide. Likewise, "protein residue" refers to the part of the PGP that originates from a protein. "Residue" refers to the moiety or constituent of the polysaccharide or protein that forms the polysaccharide glycated protein.

As used here "polysaccharide" refers to polymeric carbohydrate structures that comprise monosaccharides units joined together by glycosidic bonds. These structures may be linear, or they may contain various degrees of branching. Polysaccharides typically contain between 20 and 1000 monosaccharide units.

As used here "protein" refers to a polymer built from amino acids arranged in a chain and joined together by peptide bonds between the carboxyl and amino groups of adjacent amino acid residues. Typically, the protein contains at least 10 amino acid residues. The protein employed in accordance with the present invention can be, for instance, an intact naturally occurring protein, a protein hydrolysate or a synthesised protein.

As used here an "interface" or "interface layer" is the layer that separates the one or more hydrophobic substances in the microcapsule from the surrounding environment (e.g. an aqueous liquid or a gaseous atmosphere). As used here a "proteinaceous interface" or "proteinaceous interface layer" is an interface layer that, water excluded, contains at least 25 wt.%, preferably at least 50 wt.% of protein and/or protein derivatives, such as PGP. The interface layer in some, but not necessarily all embodiments, has a uniform thickness. Further, it need not necessarily be a continuous layer, but rather may be discontinuous, irregular or the like, so long as it is effective as an interface between the hydrophobic substance(s) and the aqueous medium in which the microcapsules are dispersed. In some embodiments the proteinaceous interface layer is comprised of a number of protein molecules, some of which include a polysaccharide tail (PGP). In many embodiments the polysaccharide tail on the PGP molecules may induce a repulsive interaction with other microcapsules, thereby preventing aggregation and contributing to steric stability of the microcapsule.

In certain embodiments an aqueous solution is prepared comprising at least one protein and at least one polysaccharide. In at least some such embodiments the at least one protein comprises or consists essentially of any food grade protein(s). Certain non-limiting examples of the at least one protein include, for example, whey protein, such as beta-lactoglobulin, alpha-lactalbumin, whey protein isolate, whey protein concentrate, ovalbumine, lysozym, potato protein, soy protein, zein, gluten, pea protein, meat protein or a combination of any of them. The at least one polysaccharide in at least some embodiments comprises or consists essentially of any high molecular weight polysaccharide. Certain non-limiting examples of the at least one polysaccharide include, for example, pullulan, dextran, guar gum, locust bean gum, tara gum, pectin, or combinations of any of them. In certain embodiments the solution of the at least one protein and the at least one polysaccharide comprises 10-20 wt.% of the at least one protein and 10-25 wt.% of the at least one polysaccharide. In some embodiments the ratio of polysaccharide to protein may be, for example, 1:50 to 2:1. In alternative embodiments the ratio of polysaccharide to protein may be, for example, 1:10. In certain embodiments the solution of the at least one protein and the at least one polysaccharide is subjected to mixing, such as, high shear mixing. In certain embodiments the high shear mixing may occur at 5000 rpm for 10 min.

In certain embodiments the solution of the at least one protein and the at least one polysaccharide is freeze dried so as to combine the at least one protein and the at least one polysaccharide at the molecular level. The solution may be freeze dried by any method known by those of skill in the art. For example, the solution may be placed in a freeze-drying tray, which is then placed in a space connected to a cold area (-40°C) which is pumped to vacuum (ca 10⁻⁵ bar) for 24 hours. Any standard freeze drying setup may be utilized.

In alternative embodiments the at least one protein and the at least one polysaccharide may be combined at the molecular level by subjecting a combination of the at least one protein and the at least one polysaccharide to mechanical grinding, for example, by ball milling, mortar and pestle or any other form of trituration.

In some embodiments the freeze dried product of the at least one protein and the at least one polysaccharide is heated, to form a polysaccharide-glycated protein (PGP). In certain embodiments the freeze dried product is heated at 40-60°C and 40-80% relative humidity for 24-48 hours. In some embodiments the freeze dried product is heated at 60°C and 60% relative humidity for 24-48 hours. In certain embodiments the heating of the freeze-dried product causes a Maillard reaction thereby forming PGP.

PGP formed from a Maillard reaction comprises at least one polysaccharide residue and at least one protein residue. In certain embodiments the at least one protein residue comprises a whey protein residue, an ovalbumine residue, a lysozym residue, a potato protein residue, a soy protein residue, a zein residue, a gluten residue, or a combination of any of them. Additionally, in certain embodiments the at least one polysaccharide residue comprises a pullulan residue, a dextran residue, a guar gum residue, a locust bean gum residue, a tara gum residue, a pectin residue, or a combination of any of them.

In certain embodiments the polysaccharide residue contains at least 90 wt.% of monosaccharide units comprising at least one of glucose, fructose, arabinose, galactose, and derivatives of glucose, fructose, arabinose, and galactose. In certain embodiments the polysaccharide residue is a homopolymer comprising at least 90 wt.% of the same monosaccharide units. In certain embodiments the polysaccharide residue contained in the PGP has a molecular weight, for example, of at least 5 kDa, 10 kDa, 100 kDa, or 200 kDa as determined by Size Exclusion Chromatography analysis. In certain embodiments the polysaccharide residue contained in the PGP has a molecular weight that shall not exceed 1000 kDAa.

In certain embodiments an emulsion is prepared by combining PGP with water and a hydrophobic substance. In certain embodiments the hydrophobic substance is, for example, an oil droplet. Droplet is used to refer to an amount of a substance, e.g., oil, that is bounded completely or almost completely by free surfaces. In certain embodiments the droplet may have a defined shape, e.g., may be generally spherical in shape. In certain embodiments the oil droplet is a lipophilic nutrient or a water-insoluble flavorant. In some embodiments the oil droplet may contain a lipophilic nutrient or a water-insoluble flavorant in combination with an antioxidant (e.g., α-tocopherol, carotenes, and ubiquinol).

In certain embodiments the lipophilic nutrients may comprise or consist essentially of fat soluble vitamins, (e.g., vitamins A, D, E, and K), tocotrienols, carotenoids, xanthophylls, (e.g., lycopene, lutein, astaxanthin, and zeazanthin), fat-soluble nutraceuticals including phytosterols, stanols and esters thereof, Coenzyme Q10 and ubiquinol, hydrophobic amino acids and peptides, essential oils and extracts, and fatty acids. Fatty acids may include, for example, conjugated linolenic acid (CLA), omega-6 fatty acids, and omega-3 fatty acids. Suitable omega-3 fatty acids include, e.g., short-chain omega-3 fatty acids such as alpha-linolenic acid (ALA), which are derived from plant sources, for example flaxseed, and long-chain omega-3 fatty acids such as eicosapentaenoic acid (EPA) and docosahexaenoic acid (DHA). In certain embodiments the long-chain omega-3 fatty acids can be derived from, for example, marine or fish oils. Such oils can be extracted from various types of fish or marine animals, such as anchovies, capelin, cod, herring, mackerel, menhaden, salmon, sardines, shark and tuna, or from marine vegetation, such as micro-algae, or a combination of any of them. Other sources of omega-3 fatty acids include liver and brain tissue and eggs.

In certain embodiments the water-insoluble flavorant may comprise or consist essentially of any substance that provides a desired flavor to a food or beverage product, which does not substantially dissolve in water (e.g., non-polar, hydrophobic substances such as lipids, fats, oils, etc.). In certain embodiments the flavorant may be a liquid, gel, colloid, or particulate solid, e.g., an oil, an extract, an oleoresin, or the like. Exemplary water-insoluble flavorants include, but are not limited to, citrus oils and extracts, e.g. orange oil, lemon oil, grapefruit oil, lime oil, citral and limonene, nut oils and extracts, e.g. almond oil, hazelnut oil and peanut oil, other fruit oils and extracts, e.g. cherry oil, apple oil and strawberry oil, botanical oils and extracts, e.g., coffee oil, mint oil, vanilla oil, and combinations of any of them.

In certain embodiments, water, a hydrophobic substance, and PGP are combined to form an oil-in-water emulsion. In certain embodiments the emulsion comprises PGP, water, a hydrophobic substance, and at least one of a second protein, a second polysaccharide, and a pectin. In some embodiments the second protein and the second polysaccharide may be non-reacted protein and polysaccharide in the PGP material. In certain embodiments the emulsion is homogenized after the combining of the water and oil, alternatively after the combining of the water, the oil, and the PGP. In certain embodiments the homogenization is a two-stage high pressure homogenization process (i.e., 800 and 80 bar). In alternative embodiments the emulsion may be formed by other methods known in the art, including microfluidic emulsification, piston type emulsification, or membrane emulsification. In certain embodiments after homogenization, the PGP and the at least one of a second protein, a second polysaccharide, and a pectin accumulate at the interface of the water and the oil forming a proteinaceous interface and thereby forming microcapsules in an aqueous dispersion. In certain embodiments an acidulant and/or chemical preservative may be added, prior to, during, or after formation of the emulsion. Non-limiting examples of an acidulant include, for example, citric acid, Glucono delta-lactone, adipate, phosphoric acid, acetic acid, and tartaric acid. Non-limiting examples of a chemical preservative include, for example, sodium hexameta phosphate (SHMP), calcium propionate, calcium sorbate, potassium sorbate, sodium citrate, potassium citrate, calcium benzoate, sodium benzoate, potassium benzoate, sodium nitrate, sodium chloride, sulphur dioxide, natamycin, nisin, sulfites (sulfur dioxide, sodium bisulfite, potassium hydrogen sulfite, etc.) and disodium EDTA. Alternatively, the emulsion may be treated with anti-microbials, radiation, heat processing, e.g., pasteurization using ultra high temperature (UHT) treatment and/or high temperature-short time (HTST) treatment, or packaged aseptically.

In certain embodiments an emulsion may comprise or consist essentially of PGP, water, a hydrophobic substance, and at least one of a second protein, a second polysaccharide, or combinations of any of them. In certain embodiments the PGP and at least one of the second protein, the second polysaccharide, or combinations of any of them accumulate to form a proteinaceous interface. In certain embodiments an interface layer has a dry weight composition comprising 0.1-100 wt.% PGP, 0-99.99 wt.% second protein, and 0-75 wt.% second polysaccharide, wherein the PGP, second protein, and second polysaccharide represent at least 80 wt.%, or further, at least 90 wt.% of the interface layer's dry weight composition. In an alternative embodiment an interface layer has a dry weight composition comprising 0.25-30 wt.% PGP, 20-99.75 wt.% protein, and 0-50 wt.% polysaccharide. In a further embodiment an interface layer has a dry weight composition comprising 0.5-25 wt.% PGP, 20-95.5 wt.% second protein, and 2-40 wt.% second polysaccharide.

The amount of PGP employed in forming the proteinaceous interface layer of the microcapsules can vary widely and depends, amongst other things, on the oil droplet size. In certain embodiments the microcapsules contain 0.1-50% PGP by weight of dry matter. In alternative embodiments the microcapsules contain, for example, 0.25-10% PGP by weight of dry matter basis or, in an another embodiment, 0.5% to 5% PGP by weight of dry matter. In certain embodiments the mean thickness of the proteinaceous interface layer of microcapsules is within the range of, for example, 0.005 to 10 µm, 0.05 to 5 µm, or 0.1 to 1 µm. The thickness of the proteinaceous interface layer may be measured, for example, by centrifuging the emulsion and using infrared or Raman spectra of the microcapsule containing creamed material that forms after centrifugation, or using microscopy, e.g., transmission electron microscopy (TEM).

In some embodiments an emulsion may comprise or consist essentially of PGP, water, a hydrophobic substance, and pectin. The pectin may be selected, for example, from the group comprising a high ester (HM) pectin (≥50% esterification), a low ester (LM) pectin (≤50% esterification), an amidated pectin, and combinations of any of them. In some embodiments the pectin is a high methyl ester pectin. In certain embodiments the pectin is more than 75% esterified. In certain embodiments the pectin is a citrus pectin. In certain embodiments the pectin has a molecular weight of, for example, 60 kDa-500 kDa or 100 kDa-200 kDa g/mol. In certain embodiments the proteinaceous interface layer comprises pectin in a concentration, for example, of at least 0.5% or at least 10% by weight of dry matter, and not exceeding 75% by weight of dry matter.

In certain embodiments the emulsion comprises, for example, 0.01-45 wt.%, or alternatively 0.01-20 wt.% of dispersed oil; 0.001-10 wt.%, or alternatively 0.01-3 wt.% or alternatively 0.001-2 wt.% of PGP; 0-30 wt.%, or alternatively 0.05-10 wt.% of biopolymer selected from the group consisting of proteins, polysaccharides and combinations of any of them; 50-99.989 wt.%, or alternatively 70-99.3 wt.% of water; and wherein the various constituents together represent, for example, at least 95 wt.%, or in certain embodiments at least 98 wt.% of the emulsion.

In certain embodiments the oil droplets contain, for example, at least 3 wt.%, at least 5 wt.%, no more than 10 wt.%, or alternatively no more than 30 wt.%, polyunsaturated fatty acids selected from omega-3 fatty acids, omega-6 fatty acids and combinations of any of them. In certain embodiments the one or more polyunsaturated fatty acids are selected from DHA, EPA, CLA and combinations of any of them. In some embodiments the oil droplets contain, for example, at least 5 wt.%, or alternatively no more than 10 wt.% polyunsaturated fatty acids selected from DHA, EPA, CLA and combinations of any of them.

In certain embodiments the microcapsules of the present invention have a volume weighted average diameter in the range of 0.1-500 µm, 0.1-100 µm, 0.3-50 µm, 0.5-30 µm, or 0.7-20 µm. In certain embodiments the oil droplets in the microcapsules have a mean diameter in the range of, for example, 0.01-20 µm or 0.1-10 µm. The microcapsule size disclosed here includes any or at least one value within the disclosed ranges as well as the endpoints of the ranges. The microcapsule size may be measured by any method known to those of skill in the art, including by microscopy or laser light scattering.

In certain embodiments the oil droplets represent, for example, at least 5 wt.%, at least 10 wt.%, at least 20 wt.%, or at least 35 wt.% of the microcapsule. In certain embodiments the oil droplets represent not more than 80 wt.% of the microcapsules. In certain embodiments the oil droplets typically have a melting point of, for example, less than 40°C, less than 30°C, or less than 15°C.

Certain embodiments of the aqueous dispersions disclosed here can be prepared at a neutral pH of, for example, about 6.0 to 7.0. In certain embodiments the neutral aqueous dispersion can then be added to a food product, e.g., an acidic or neutral food product that may be at a pH of, for example, at least pH 1.0, pH 1.0 to pH 7.0, pH 1.0 to pH 5.5, not more than pH 7.0, or not more than pH 5.5. In some embodiments the aqueous dispersion of microcapsules is added to a food product having a final pH value (i.e., a pH value in the fully prepared, as-packaged product) at or below 3.5. In some embodiments the aqueous dispersion of microcapsules is added to a food product having a final pH value at or below 3.0.

In certain embodiments the aqueous dispersion of the present invention may contain other dispersed components in addition to the microcapsules. In certain embodiments the dispersion contains less than 20 wt.% of one or more dispersed edible components, including the dispersed microcapsules.

In certain embodiments the microcapsules are not substantially additionally stabilized, for example by substantial gelling, substantial crosslinking, or substantial hardening of the microcapsules.

In certain embodiments the aqueous dispersion of microcapsules is maintained as an aqueous dispersion. In alternative embodiments the aqueous dispersion of microcapsules is, for example, spray dried, freeze dried, drum dried, or bed dried. If maintained as an aqueous dispersion, in certain embodiments, the aqueous dispersion of microcapsules is treated to protect from microbiological growth. In certain embodiments the aqueous dispersion of microcapsules is, for example, pasteurized; aseptically packaged; treated with chemical preservatives, non-limiting examples including, for example, sodium hexameta phosphate (SHMP), calcium propionate, calcium sorbate, potassium sorbate, sodium citrate, potassium citrate, calcium benzoate, sodium benzoate, potassium benzoate, sodium nitrate, sodium chloride, sulphur dioxide, natamycin, nisin, sulfites (sulfur dioxide, sodium bisulfite, potassium hydrogen sulfite, etc.) or disodium EDTA; treated with acids, non-limiting examples including, for example, citric acid, Glucono delta-lactone, adipate, acetic acid, phosphoric acid, tartaric acid, succinic acid, or HCl; carbonated; or combinations of any of them. In some embodiments the aqueous dispersion of microcapsules has no contact or minimized contact with air during production, is pasteurized after production, and is stored in a refrigerator with no exposure of with limited exposure to light.

In certain embodiments the microcapsules are dispersed in a food product. In certain embodiments the aqueous dispersion of microcapsules contains the dispersed microcapsules in a concentration of, for example, 0.01-10% by weight, or in certain embodiments 0.1-10% by weight of the continuous aqueous phase. In certain embodiments the dispersed microcapsules are contained in the aqueous dispersion in a concentration of 0.2-5% by weight of the aqueous phase. In certain embodiments the aqueous dispersion contains a limited amount of microcapsules and the continuous aqueous phase represents the bulk, for example, at least 70 wt.%, 80-99.9 wt.%, or 90-99.8 wt.% of the aqueous dispersion.

In certain embodiments the aqueous dispersion of microcapsules is a pourable concentrate that can be used to deliver the microcapsules to food products. In accordance with this embodiment the aqueous dispersion contains 10-50 wt.% of the microcapsules and 50-10 wt.% of the continuous aqueous phase. In certain embodiments the pH of the concentrated microcapsule composition lies within the range of, for example, pH 1.0 to 4.8, or in certain embodiments within the range of pH 1.0 to 4.0.

In certain embodiments a concentrated microcapsule composition is prepared containing, for example, at least 1 wt.%, at least 5 wt.%, or at least 10 wt.% of dispersed microcapsules. In certain embodiments the concentrated microcapsule composition is combined with water and, in some embodiments, other constituents to produce a food product. In certain embodiments the combining of the concentrated microcapsule composition with water and other constituents produces a dilution factor (final volume/volume of the concentrated microcapsule composition), for example, of at least 3, or alternatively of at least 5. In certain embodiments the dilution factor does not exceed 1000.

In certain embodiments a desired amount of hydrophobic substance in the form of the above-described microcapsules is included in a food product. The amount of microcapsules, and hence the amount of hydrophobic substance included in the food product may vary depending on the application and desired taste characteristics of the food product. The microcapsules may be added to the food product in any number of ways, as would be appreciated by those of ordinary skill in the art given the benefit of this disclosure. In certain embodiments the microcapsules are sufficiently mixed in the food product to provide a substantially uniform distribution, for example a stable dispersion. Mixing should be accomplished such that the microcapsules are not destroyed. If the microcapsules are destroyed, oxidation of the hydrophobic substance may result. The mixer(s) can be selected for a specific application based, at least in part, on the type and amount of ingredients used, the viscosity of the ingredients used, the amount of product to be produced, the flow rate, and the sensitivity of ingredients, such as the microcapsules, to shear forces or shear stress.

Encapsulation of hydrophobic substances using the above-described microcapsules stabilizes the hydrophobic substance by protecting it from degradation by, for example, oxidation and hydrolysis. When included in an acidic food product, the microcapsules can provide a stable dispersion of hydrophobic substances over the shelf life of the food product. Factors that may affect the shelf-life of the microcapsules include the level of processing the product undergoes, the type of packaging, and the materials used for packaging the product. Additional factors that may affect the shelf life of the product include, for example, the nature of the base formula (e.g., an acidic beverage sweetened with sugar has a longer shelf-life than an acidic beverage sweetened with aspartame) and environmental conditions (e.g., exposure to high temperatures and sunlight is deleterious to ready-to-drink beverages).

In certain embodiments the food product is a beverage product. In certain embodiments the beverage product includes ready-to-drink beverages, beverage concentrates, syrups, shelf-stable beverages, refrigerated beverages, frozen beverages, and the like. In some embodiments the beverage product is acidic, e.g. having a pH within the range below about pH 5.0, in certain embodiments a pH value within the range of about pH 1.0 to about pH 4.5, or in certain embodiments a pH value within the range of about pH 1.5 to about pH 3.8. Beverage products include, but are not limited to, e.g., carbonated and non-carbonated soft drinks, fountain beverages, liquid concentrates, fruit juice and fruit juice-flavored drinks, sports drinks, energy drinks, fortified/enhanced water drinks, soy drinks, vegetable drinks, grain-based drinks (e.g. malt beverages), fermented drinks (e.g., yogurt and kefir) coffee beverages, tea beverages, dairy beverages, and mixtures thereof. Exemplary fruit juice sources include citrus fruit, e.g. orange, grapefruit, lemon and lime, berry, e.g. cranberry, raspberry, blueberry and strawberry, apple, grape, pineapple, prune, pear, peach, cherry, mango, and pomegranate. Beverage products include bottle, can, and carton products and fountain syrup applications.

Certain embodiments of other food products disclosed here include fermented food products, yogurt, sour cream, cheese, salsa, ranch dip, fruit sauces, fruit jellies, fruit jams, fruit preserves, and the like. In certain embodiments the food product is acidic, e.g. having a pH value within the range below about pH 5.0, in certain embodiments a pH value within the range of about 1.0 to about 4.5, or in certain embodiments a pH value within the range of about 1.5 to about 3.8.

The food product may optionally include other additional ingredients. In certain embodiments additional ingredients may include, for example, vitamins, minerals, sweeteners, water-soluble flavorants, colorings, thickeners, emulsifiers, acidulants, electrolytes, antifoaming agents, proteins, carbohydrates, preservatives, water-miscible flavorants, edible particulates, and mixtures thereof. In certain embodiments other ingredients are also contemplated. In some embodiments the ingredients can be added at various points during processing, including before or after pasteurization, and before or after addition of the microcapsules.

In at least certain embodiments food products disclosed here may be pasteurized. In certain embodiments the pasteurization process may include, for example, ultra high temperature (UHT) treatment and/or high temperature-short time (HTST) treatment. The UHT treatment includes subjecting the food or beverage product to high temperatures, such as by direct steam injection or steam infusion, or by indirect heating in a heat exchanger. Generally, after the product is pasteurized, the product can be cooled as required by the particular product composition/configuration and/or the package filling application. For example, in one embodiment, the food product is subjected to heating to about 185°F (85°C) to about 250°F (121°C) for a short period of time, for example, about 1 to 60 seconds, then cooled quickly to about 36°F (2.2°C) +/10°F (5°C) for refrigerated products, to ambient temperature for shelf stable or refrigerated products, and to about 185°F (85°C) +/- 10°F (5°C) for hot-fill applications for shelf-stable products. The pasteurization process is typically conducted in a closed system, so as not to expose the food or beverage product to atmosphere or other possible sources of contamination. In alternative embodiments other pasteurization or sterilization techniques may also be useful, such as, for example, aseptic or retort processing. In addition, multiple pasteurization processes may be carried out in series or parallel, as necessitated by the food product or ingredients.

Food products may, in addition, be post processed. In certain embodiments post processing is typically carried out following addition of the microcapsules. Post processing can include, for example, cooling the product solution and filling it into a container for packaging and shipping. In certain embodiments post processing may also include deaeration of the food product to less than 4.0 ppm oxygen, preferably less than 2.0 ppm and more preferably less than 1.0 ppm oxygen. In alternative embodiments deaeration and other post processing tasks may be carried out prior to processing, prior to pasteurization, prior to mixing with the microcapsules and/or at the same time as adding the microcapsules. In addition, an inert gas (e.g., nitrogen or argon) headspace may be maintained during the intermediary processing of the product and final packaging. Additionally/alternatively, an oxygen or UV radiation barriers and/or oxygen scavengers could be used in the final packaging.

The following examples are specific embodiments of the present invention, but are not intended to limit it.

### EXAMPLES

### Example 1

### Preparation of an aqueous dispersion of microcapsules containing fish oil

An aqueous dispersion of microcapsules in accordance with one exemplary embodiment of the disclosure was prepared using the following method.

An aqueous solution of 10% native whey protein isolate (WPI) and 10% pullulan (molar mass about 200 kDa) was subjected to high-shear mixing for 2 minutes, using a table top Turrax (5000 rpm) (percentages by weight). The aqueous solution of whey protein and pullulan was then freeze dried for 24 hr using a standard freeze drying unit. The freeze dried product was then held at 60°C and 60% relative humidity for 48 hours to obtain a polysaccharide glycated protein containing product (PGP).

An emulsion was then prepared by high pressure homogenizing a mixture of 12% fish oil, 73% water and 5% PGP product (percentages by weight) at 300-800 bar. The emulsion was stored at 32°C (90°F) for 7 days and was then tested for smell and taste. No noticeable oxidative decay of the fish oil was detected.

### Example 2

### Preparation of a beverage containing fish oil

The emulsion, prepared as described in Example 1, was added to an aqueous solution having a pH of pH 3. The final oil concentration in the aqueous solution was 0.072% (by weight) fish oil.

The emulsion was stored at 32°C (90°F) for 7 days and was then tested for smell and taste. No noticeable oxidative decay of the fish oil was detected. The visual appearance of the emulsion was homogeneous with slight turbidity.

### Example 3

### Reparation of a beverage containing fish oil

An aqueous solution having an aqueous dispersion of microcapsules in accordance with another exemplary embodiment of the disclosure was prepared using the following method.

An aqueous solution of 10% native whey protein isolate (WPI) and 10% dextran (molar mass about 200 kDa) was subjected to high-shear mixing for 2 min, using a table top Turrax (5000 rpm) (percentages by weight). The aqueous solution of whey protein and dextran was then freeze dried for 24 hours using a standard freeze drying set up. The freeze dried product was then held at 60°C and 60% relative humidity for 48 hours to obtain a polysaccharide glycated protein containing product (PGP).

An emulsion was then prepared by high pressure homogenizing a mixture of 12% fish oil, 73% water and 5% PGP product (percentages by weight) at 300-800 bar. The emulsion was added to an aqueous solution having a pH of pH 3. The final oil concentration in the aqueous solution was 0.072% (by weight) fish oil.

The emulsion was stored at 32°C (90°F) for 7 days and was then tested for smell and taste. No noticeable oxidative decay of the fish oil was detected. The visual appearance of the emulsion was homogeneous with slight turbidity.

### Example 4

### Preparation of a beverage containing fish oil

An aqueous solution having an aqueous dispersion of microcapsules in accordance with an alternative exemplary embodiment of the disclosure was prepared using the following method.

An aqueous solution of 10% native ovalbumin and 10% pullulan (molar mass about 200 kDa) was subjected to high-shear mixing for 2 minutes, using a table top Turrax (5000 rpm) (percentages by weight). The aqueous solution of ovalbumin and pullulan was then freeze dried for 24 hours using a standard freeze drying set up. The freeze dried product was then held at 60°C and 60% relative humidity for 48 hours to obtain a polysaccharide glycated protein containing product (PGP).

An emulsion was prepared by high pressure homogenizing a mixture of 12% fish oil, 73% water and 5% PGP product (percentages by weight) at 300-800 bar. The emulsion was then added to an aqueous solution having a pH of pH 3. The final oil concentration in the aqueous solution was 0.072% (by weight) fish oil.

The emulsion was stored at 32°C (90°F) for 7 days and was then tested for smell and taste. No noticeable oxidative decay of the fish oil was detected. The visual appearance of the emulsion was homogeneous with slight turbidity.

### Example 5

### Composition of the microcapsules

The emulsion described in Example 2 was centrifuged at 5000g for 60 min. A 2 mL sample was taken from the oil containing turbid layer on top of the solution by means of a pipette and freeze dried using a standard freeze drying set up. Next, the sample was analysed with respect to protein (WPI), polysaccharide (pullulan) and polysaccharide glycated protein (PGP) content by Infra Red spectroscopy and Size Exclusion Chromatography. The content of free amino (-NH₂) groups was determined from the absorption of light at 340nm in solutions containing the material, as well as ortho-phthalaldehyde (OPA), N,N-dimethyl-2-mercaptoethyl-ammominium chloride, borax and sodium dodecyl sulfate (SDS).

The results showed that the encapsulate material, surrounding the oil droplets consisted of 65% protein, 35% polysaccharide, and that at least 4.5% of the protein had reacted with pullulan to form PGP.

The invention has been described with reference to the preferred embodiments. Obviously, modifications and alterations will occur to others upon reading and understanding the preceding detailed description. It is intended that the invention be construed as including all such modifications and alterations insofar as they come within the scope of the appended claims.

## Claims

1. An aqueous dispersion of microcapsules wherein the microcapsules comprise:
a. at least one hydrophobic substance; and
b. a proteinaceous interface surrounding the at least one hydrophobic substance, wherein the proteinaceous interface comprises a non-reacted protein, a non-reacted polysaccharide and a polysaccharide glycated protein, and
wherein the polysaccharide glycated protein comprises at least one protein residue and at least one polysaccharide residue having a molecular weight of af least 5 kDa.

2. The aqueous dispersion of claim 1 wherein the microcapsule consists essentially of:
a. at least one hydrophobic substance; and
b. a proteinaceous interface surrounding the at least one hydrophobic substance, wherein the proteinaceous interface consists essentially of a polysaccharide glycated protein, and
wherein the polysaccharide glycated protein consists essentially of at least one protein residue and at least one polysaccharide residue, preferably wherein the at least one polysaccharide residue has a molecular weight of at least 5 kDa, or wherein the at least one polysaccharide residue has a molecular weight of at least 200 kDa.

3. The aqueous dispersion of claim 1 or 2 having one or more of the following:
wherein the at least one polysaccharide residue is selected from pullulan residue, dextran residue, guar gum residue, locust bean gum residue, tara gum residue, pectin residue, and combinations of any of them,
wherein the at least one protein residue is selected from whey protein residue, ovalbumine residue, lysozym residue, potato protein residue, soy protein residue, zein residue, gluten residue, and combinations of any of them,
wherein the at least one hydrophobic substance is selected from lipids, water-insoluble vitamins, water-insoluble sterols, water-insoluble flavonoids, flavors, essential oils, and combinations of any of them.
wherein the at least one protein residue comprises a whey protein residue and the at least one polysaccharide residue comprises a pullulan residue,
wherein the microcapsules have a volume weighted average diameter in the range of 0.1-500 µm.

4. The aqueous dispersion of any of the claims 1-3 wherein the at least one hydrophobic substance is an oil droplet, preferably wherein the oil droplet has a mean diameter in the range of 0.01-20 µm.

5. The aqueous dispersion of any of the preceding claims wherein the proteinaceous interface further comprises at least one second protein and at least one second polysaccharide, preferably wherein the proteinaceous interface has a dry weight composition of:
a. 0.25-30 wt.% polysaccharide glycated protein;
b. 20-97.5 wt.% second protein; and
c. 0-50 wt.% second polysaccharide,
and more preferably,
wherein the polysaccharide glycated protein, the second protein, and the second polysaccharide represent at least 80 wt.% of the dry weight composition of the proteinaceous interface.

6. The aqueous dispersion of any of the preceding claims wherein the proteinaceous interface has a mean thickness of 0.005-10 µm.

7. The aqueous dispersion of any of the preceding claims wherein the proteinaceous interface further comprises at least one pectin, preferably wherein the pectin comprises at least 0.5 wt.% of the dry weight composition of the proteinaceous interface.

8. The aqueous dispersion of claim 7, wherein the at least one pectin is selected from a high ester pectin, a low ester pectin, an amidated pectin and combinations of any of them, preferably wherein the at least one pectin comprises a high methyl ester pectin, more preferably wherein the at least one pectin comprises a citrus pectin.

9. The aqueous dispersion of any of the preceding claims having one or more of the following:
wherein the at least one hydrophobic substance comprises at least 5 wt% of the microcapsule,
wherein the at least one hydrophobic substance comprises an oil containing a polyunsaturated fatty acid,
wherein the at least one hydrophobic substance comprises an oil containing a polyunsaturated fatty acid selected from an omega-3 fatty acid, an omega-6 fatty acid, or a combination of any of them.
wherein the at least one hydrophobic substances comprises an oil containing docosahexaenoic acid (DHA), eicosapentaenoic acid (EPA), steradonic acid, α-Linolenic acid (ALA), conjugated linoleic acid (CLA), or a combination of any of them.
wherein the at least one polysaccharide residue comprises pullulan residue, the at least one protein residue comprises whey protein residue, and the at least one hydrophobic substance comprises omega-3 fatty acid, preferably further comprising pectin.

10. A food product comprising the aqueous dispersion of microcapsules of any of the preceding claims, preferably wherein the food product is a beverage.

11. The food product of claim 10, having a pH of 1.0 to 7.0.

12. A method for forming an aqueous dispersion of microcapsules according to any of the preceding claims comprising the steps of::
a. preparing a solution of a protein and a polysaccharide;
b. freeze drying the solution of the protein and the polysaccharide to form a freeze dried product;
c. heating the freeze dried product comprising the protein and the polysaccharide to form polysaccharide glycated protein;
d. combining and homogenizing water, a hydrophobic substance, and the polysaccharide glycated protein into an emulsion with the polysaccharide glycated protein accumulating at the interface of the hydrophobic substance and the water, thereby producing an aqueous dispersion of microcapsules, preferably wherein the solution of the protein and the polysaccharide comprises 10-20 wt.% of the protein and 10-25 wt.% of the polysaccharide.

13. The method for forming an aqueous dispersion of microcapsules according to claim 12 having one or more of the following:
wherein the solution of the protein and the polysaccharide is subject to high shear mixing for 10 min, at 5000 rpm using a table top mixer,
wherein the solution of the protein and the polysaccharide is freeze dried, preferably wherein the freeze dried product is heated at 40-60° C, at 40-80% relative humidity, for 24-48 hours,
wherein the emulsion of polysaccharide glycated protein, water, and a hydrophobic substance has a pH of about 6.0 to 7.0,
wherein the aqueous dispersion of microcapsules is added to a food product, preferably wherein the food product has a pH of 1.0 to 5.5.

14. A food product comprising microcapsules, wherein the microcapsules comprise:
a. at least one hydrophobic substance; and
b. a layer around the at least one hydrophobic substance,
wherein the layer comprises polysaccharide glycated protein, and
wherein the polysaccharide glycated protein comprises at least one protein residue and at least one polysaccharide residue.

15. An aqueous dispersion of microcapsules wherein the microcapsules comprise:
a. at least one hydrophobic substance comprising omega-3 fatty acids; and
b. a proteinaceous interface around the at least one hydrophobic substance, wherein the proteinaceous interface comprises polysaccharide glycated protein, wherein the polysaccharide glycated protein comprises at least one whey protein residue and at least one pullulan residue, and
wherein the proteinaceous interface has a mean thickness of 0.005-10.0 µm.

## Patentansprüche

1. Wässrige Dispersion von Mikrokapseln, wobei die Mikrokapseln aufweisen:
a) zumindest eine hydrophobe Substanz und
b) eine proteinartige Grenzfläche, welche die zumindest eine hydrophobe Substanz umgibt,
wobei die proteinartige Grenzfläche ein nicht reagiertes Protein, ein nicht reagiertes Polysaccharid und ein Polysaccharid-glykosiliertes Protein umfasst und wobei das Polysaccharid-glykosilierte Protein zumindest einen Proteinrest und zumindest einen Polysaccharidrest umfasst, der ein Molekulargewicht von zumindest 5kDa aufweist.

2. Wässrige Dispersion nach Anspruch 1, wobei die Mikrokapsel im Wesentlichen aus
a) zumindest einer hydrophoben Substanz und
b) einer proteinartigen Grenzfläche besteht, welche die zumindest eine hydrophobe Substanz umgibt,
wobei die proteinartige Grenzfläche im Wesentlichen aus einem Polysaccharidglykosilierten Protein besteht,
wobei das Polysaccharid-glykosilierte Protein im Wesentlichen aus zumindest einem Proteinrest und zumindest einem Polysaccharidrest besteht,
wobei vorzugsweise der zumindest eine Polysaccharidrest ein Molekulargewicht von zumindest 5kDa aufweist oder wobei der zumindest eine Polysaccharidrest ein Molekulargewicht von zumindest 200kDa aufweist.

3. Wässrige Dispersion nach Anspruch 1 oder 2, wobei sie ein oder mehrere der folgenden Merkmale aufweist:
wobei der zumindest eine Polysaccharidrest aus einem Pollulanrest, Dextranrest, Guaranrest, Johannisbrotkernmehlrest, Tarakernmehlrest, Pektinrest und Kombinationen von irgendwelchen daraus ausgewählt ist,
wobei der zumindest eine Proteinrest von einem Molkeproteinrest, Eieralbuminrest, Lysozymrest, Kartoffelproteinrest, Sojaproteinrest, Maiseiweißrest, Glutenrest und Kombinationen von irgendwelchen daraus ausgewählt ist,
wobei die zumindest eine hydrophobe Substanz aus Lipiden, wasserunlöslichen Vitaminen, wasserunlöslichen Sterolen, wasserunlöslichen Flavonoiden, Aromen, essentiellen Ölen und Kombinationen von irgendwelchen daraus ausgewählt ist, wobei der zumindest eine Proteinrest einen Molkeproteinrest enthält und der zumindest eine Polysaccharidrest einen Pollulanrest umfasst,
wobei die Mikrokapseln einen volumengewichteten Durchschnittsdurchmesser im Bereich von 0,1-500µm aufweisen.

4. Wässrige Dispersion nach einem der Ansprüche 1 bis 3, wobei die zumindest eine hydrophobe Substanz ein Öltröpfchen ist, wobei das Öltröpfchen vorzugsweise einen mittleren Durchmesser im Bereich von 0,01-20µm aufweist.

5. Wässrige Dispersion nach einem der vorhergehenden Ansprüche, wobei die proteinartige Grenzfläche ferner zumindest ein zweites Protein und zumindest ein zweites Polysaccharid umfasst, wobei die proteinartige Grenzfläche vorzugsweise eine Trockengewichtszusammensetzung aus
a) 0,25-30 Gewichts-% Polysaccharid-glykosiliertem Protein,
b) 20-97,5 Gewichts-% zweitem Protein und
c) 0-50 Gewichts-% zweitem Polysaccharid
aufweist
und wobei bevorzugterweise das Polysaccharid-glykosilierte Protein, das zweite Protein und das zweite Polysaccharid zumindest 80 Gewichts-% der Trockengewichtszusammensetzung der proteinartigen Grenzfläche ausmachen.

6. Wässrige Dispersion nach einem der vorhergehenden Ansprüche, wobei die proteinartige Grenzfläche eine mittlere Dicke von 0,005-10µm aufweist.

7. Wässrige Dispersion nach einem der vorhergehenden Ansprüche, wobei die proteinartige Grenzfläche ferner zumindest ein Pektin umfasst, wobei das Pektin vorzugsweise zumindest 0,5 Gewichts-% der Trockengewichtszusammensetzung der proteinartigen Grenzfläche umfasst.

8. Wässrige Dispersion nach Anspruch 7, wobei das zumindest eine Pektin aus einem Hoch-Ester-Pektin, einem Nieder-Ester-Pektin, einem amidierten Pektin und Kombinationen von irgendwelchen daraus ausgewählt ist und wobei vorzugsweise das zumindest eine Pektin ein Hoch-Methylester-Pektin enthält und wobei bevozugterweise das zumindest eine Pektin ein Zitrus-Pektin enthält.

9. Wässrige Dispersion nach einem der vorhergehenden Ansprüche, umfassend ein oder mehrere der folgenden Merkmale:
wobei die zumindest eine hydrophobe Substanz zumindest 5 Gewichts-% der Mikrokapsel umfasst,
wobei die zumindest eine hydrophobe Substanz ein Öl umfasst, welches eine mehrfach ungesättigte Fettsäure enthält,
wobei die zumindest eine hydrophobe Substanz ein Öl umfasst, welches eine mehrfach ungesättigte Fettsäure enthält, die aus einer Omega-3-Fettsäure, einer Omega-6-Fettsäure oder aus einer Kombination von irgendwelchen daraus ausgewählt ist,
wobei die zumindest eine hydrophobe Substanz ein Öl umfasst, welches Docosahexaensäure (DHA), Eicosapentaensäure (EPA), Steradonsäure, α-Linolensäure (ALA), konjugierte Linolsäure (CLA) oder eine Kombination von irgendwelchen daraus enthält,
wobei der zumindest eine Polysaccharidrest einen Pullulanrest umfasst, wobei der zumindest eine Proteinrest einen Molkeproteinrest umfasst und wobei die zumindest eine hydrophobe Substanz Omega-3-Fettsäure umfasst, vorzugsweise ferner umfassend Pektin.

10. Nahrungsmittel, umfassend eine wässrige Dispersion von Mikrokapseln nach einem der vorhergehenden Ansprüche, wobei das Nahrungsmittel vorzugsweise ein Getränk ist.

11. Nahrungsmittel nach Anspruch 10, welches einen pH-Wert von 1,0 bis 7,0 aufweist.

12. Verfahren zur Bildung einer wässrigen Dispersion von Mikrokapseln nach einem der vorhergehenden Ansprüche, umfassend die Schritte:
a) Herstellen einer Lösung aus einem Protein und einem Polysaccharid,
b) Gefriertrocknen der Lösung aus dem Protein und dem Polysaccharid zur Bildung eines gefriergetrockneten Erzeugnisses,
c) Erwärmen des gefriergetrockneten Erzeugnisses, welches das Protein und das Polysaccharid umfasst, um Polysaccharid-glykosiliertes Protein zu bilden,
d) Kombinieren und Homogenisieren von Wasser, einer hydrophoben Substanz und des Polysaccharid-glykosilierten Proteins in einer Emulsion, bei der sich das Polysaccharid-glykosilierte Protein an der Grenzfläche der hydrophoben Substanz und des Wassers ansammelt, um dadurch eine wässrige Dispersion von Mikrokapseln zu bilden, wobei die Lösung aus dem Protein und dem Polysaccharid vorzugsweise 10-20 Gewichts-% des Proteins und 10-25 Gewichts-% des Polysaccharids umfasst.

13. Verfahren zur Bildung einer wässrigen Dispersion aus Mikrokapseln nach Anspruch 12 mit einem oder mehreren der folgenden Merkmale:
wobei die Lösung aus dem Protein und dem Polysaccharid einem starken Schermixen für 10min bei 5000 Umdrehungen pro Minute unter Verwendung eines Standmixers ausgesetzt wird,
wobei die Lösung aus dem Protein und dem Polysaccharid gefriergetrocknet wird, wobei das gefriergetrocknete Erzeugnis vorzugsweise bei 40-60°C, bei 40-80% relativer Feuchtigkeit während 24-48 Stunden erwärmt wird,
wobei die Emulsion aus Polysaccharid-glykosiliertem Protein, Wasser und einer hydrophoben Substanz einen pH-Wert von etwa 6,0 bis 7,0 aufweist,
wobei die wässrige Dispersion aus Mikrokapseln einem Nahrungsmittel hinzugesetzt wird, wobei das Nahrungsmittel vorzugsweise einen pH-Wert von 1,0 bis 5,5 aufweist.

14. Nahrungsmittel, umfassend Mikrokapseln, wobei die Mikrokapseln enthalten:
a) zumindest eine hydrophobe Substanz und
b) eine Schicht um die zumindest eine hydrophobe Substanz,
wobei die Schicht Polysaccharid-glykosiliertes Protein enthält
und wobei das Polysaccharid-glykosilierte Protein zumindest einen Proteinrest und zumindest einen Polysaccharidrest enthält.

15. Wässrige Dispersion von Mikrokapseln, wobei die Mikrokapseln umfassen:
a) zumindest eine hydrophobe Substanz, die Omega-3-Fettsäuren enthält, und
b) eine proteinartige Grenzfläche um die zumindest eine hydrophobe Substanz, wobei die proteinartige Grenzfläche Polysaccharid-glykosiliertes Protein enthält, wobei das Polysaccharid-glykosilierte Protein zumindest einen Molkeproteinrest und zumindest einen Pullulanrest enthält
und wobei die proteinartige Grenzfläche eine mittlere Dicke von 0,005-10,0µm aufweist.

## Revendications

1. Dispersion aqueuse de microcapsules dans laquelle les microcapsules comprennent :
a. au moins une substance hydrophobe ; et
b. une interface protéique entourant ladite au moins substance hydrophobe, dans laquelle l'interface protéique comprend une protéine n'ayant pas réagi, un polysaccharide n'ayant pas réagi et un polysaccharide-protéine glyquée, et
dans laquelle le polysaccharide-protéine glyquée comprend au moins un résidu protéique et au moins un résidu polysaccharidique, ayant un poids moléculaire d'au moins 5 kDa.

2. Dispersion aqueuse selon la revendication 1 dans laquelle la microcapsule est essentiellement constituée par :
a. au moins une substance hydrophobe ; et
b. une interface protéique entourant ladite au moins substance hydrophobe,
dans laquelle l'interface protéique est essentiellement constituée par un polysaccharide-protéine glyquée, et
dans laquelle le polysaccharide-protéine glyquée est essentiellement constitué par au moins un résidu protéique et au moins un résidu polysaccharidique, de préférence dans laquelle ledit au moins résidu polysaccharidique a un poids moléculaire d'au moins 5 kDa, ou dans laquelle ledit au moins résidu polysaccharidique a un poids moléculaire d'au moins 200 kDa.

3. Dispersion aqueuse selon la revendication 1 ou 2 ayant une ou plusieurs des caractéristiques suivantes :
dans laquelle ledit au moins résidu polysaccharidique est choisi parmi un résidu pullulane, un résidu dextrane, un résidu gomme guar un résidu gomme de caroube, un résidu gomme tara, un résidu pectine, et des combinaisons quelconques de ceux-ci,
dans laquelle ledit au moins résidu protéique est choisi parmi un résidu protéine de petit-lait, un résidu ovalbumine, un résidu lysozyme, un résidu protéine de pomme de terre, un résidu protéine de soja, un résidu zéine, un résidu gluten, et des combinaisons quelconques de ceux-ci,
dans laquelle ladite au moins substance hydrophobe est choisie parmi les lipides, les vitamines insolubles dans l'eau, les stérols insolubles dans l'eau, les flavonoïdes insolubles dans l'eau, les arômes, les huiles essentielles, et des combinaisons quelconques de ceux-ci,
dans laquelle ledit au moins résidu protéique comprend un résidu protéine de petit-lait et ledit au moins résidu polysaccharidique comprend un résidu pullulane,
dans laquelle les microcapsules ont un diamètre moyen pondéré en fonction du volume dans la plage de 0,1 à 500 *µ*m.

4. Dispersion aqueuse selon l'une quelconque des revendications 1 à 3 dans laquelle ladite au moins substance hydrophobe est une gouttelette d'huile, de préférence dans laquelle la gouttelette d'huile a un diamètre moyen dans la plage de 0,01 à 20 *µ*m.

5. Dispersion aqueuse selon l'une quelconque des revendications précédentes dans laquelle l'interface protéique comprend en outre au moins une seconde protéine et au moins un second polysaccharide, de préférence dans laquelle l'interface protéique a la composition en poids sec suivants :
a. de 0,25 à 30 % en poids de polysaccharide-protéine glyquée ;
b. de 20 à 97,5 % en poids de seconde protéine ; et
c. de 0 à 50 % en poids de second polysaccharide,
et plus préférablement,
dans laquelle le polysaccharide-protéine glyquée, la seconde protéine, et le second polysaccharide représentent au moins 80 % en poids de la composition en poids sec de l'interface protéique.

6. Dispersion aqueuse selon l'une quelconque des revendications précédentes dans laquelle l'interface protéique a une épaisseur moyenne de 0,005 à 10 *µ*m.

7. Dispersion aqueuse selon l'une quelconque des revendications précédentes dans laquelle l'interface protéique comprend en outre au moins une pectine, de préférence dans laquelle la pectine représente au moins 0,5 % en poids de la composition en poids sec de l'interface protéique.

8. Dispersion aqueuse selon la revendication 7, dans laquelle ladite au moins pectine est choisie parmi une pectine à haute teneur en ester, une pectine à basse teneur en ester, une pectine amidée et des combinaisons quelconques de celles-ci, de préférence dans laquelle ladite au moins pectine comprend une pectine à haute teneur en ester de méthyle, plus préférablement dans laquelle ladite au moins pectine comprend une pectine d'agrume.

9. Dispersion aqueuse selon l'une quelconque des revendications précédentes ayant une ou plusieurs des caractéristiques suivantes :
dans laquelle ladite au moins substance hydrophobe représente au moins 5 % en poids de la microcapsule,
dans laquelle ladite au moins substance hydrophobe comprend une huile contenant un acide gras polyinsaturé,
dans laquelle ladite au moins substance hydrophobe comprend une huile contenant un acide gras polyinsaturé choisi parmi un acide gras oméga-3, un acide gras oméga-6, ou une combinaison quelconque de ceux-ci,
dans laquelle ladite au moins substance hydrophobe comprend une huile contenant un acide docosahexaénoïque (DHA), un acide eicosapentaénoique (EPA), un acide stéradonique, un acide α-linolénique (ALA), un acide linoléique conjugué (CLA), ou une combinaison quelconque de ceux-ci,
dans laquelle ledit au moins résidu polysaccharidique comprend un résidu pullulane, ledit au moins résidu protéique comprend une protéine de petit-lait, et ladite au moins substance hydrophobe comprend un acide gras oméga-3, de préférence comprenant en outre une pectine.

10. Produit alimentaire comprenant la dispersion aqueuse de microcapsules selon l'une quelconque des revendications précédentes, de préférence dans lequel le produit alimentaire est une boisson.

11. Produit alimentaire selon la revendication 10, ayant un pH de 1,0 à 7,0.

12. Procédé de formation d'une dispersion aqueuse de microcapsules selon l'une quelconque des revendications précédentes comprenant les étapes suivantes :
a. la préparation d'une solution d'une protéine et d'un polysaccharide ;
b. la lyophilisation de la solution de la protéine et du polysaccharide pour former un produit lyophilisé ;
c. le chauffage du produit lyophilisé comprenant la protéine et le polysaccharide pour former un polysaccharide-protéine glyquée ;
d. la combinaison et l'homogénéisation d'eau, d'une substance hydrophobe, et du polysaccharide-protéine glyquée en émulsion, le polysaccharide-protéine glyquée s'accumulant à l'interface de la substance hydrophobe et de l'eau, pour produire ainsi une dispersion aqueuse de microcapsules, de préférence dans laquelle la solution de la protéine et du polysaccharide comprend de 10 à 20 % en poids de protéine et de 10 à 25 % en poids de polysaccharide.

13. Procédé de formation d'une dispersion aqueuse de microcapsules selon la revendication 12 ayant une ou plusieurs des caractéristiques suivants :
dans lequel la solution de la protéine et du polysaccharide est soumise à un mélange sous fort cisaillement pendant 10 min, à 5000 tours/min à l'aide d'un mélangeur de table,
dans lequel la solution de la protéine et du polysaccharide est lyophilisée, de préférence dans laquelle le produit lyophilisé est chauffé à 40 à 60°C, à une humidité relative de 40 à 80 %, pendant 24 à 48 heures,
dans lequel l'émulsion du polysaccharide-protéine glyquée, de l'eau, et de la substance hydrophobe a un pH d'environ 6,0 à 7,0,
dans lequel la dispersion aqueuse de microcapsules est ajoutée à un produit alimentaire, de préférence dans laquelle le produit alimentaire a un pH de 1,0 à 5,5.

14. Produit alimentaire comprenant des microcapsules, dans lequel les microcapsules comprennent :
a. au moins une substance hydrophobe ; et
b. une couche autour de ladite au moins substance hydrophobe,
dans lequel la couche comprend un polysaccharide-protéine glyquée, et
dans lequel le polysaccharide-protéine glyquée comprend au moins un résidu protéique et au moins un résidu polysaccharidique.

15. Dispersion aqueuse de microcapsules dans laquelle les microcapsules comprennent :
a. au moins une substance hydrophobe comprenant des acides gras oméga-3 ; et
b. une interface protéique autour de ladite au moins substance hydrophobe,
dans laquelle l'interface protéique comprend un polysaccharide-protéine glyquée,
dans laquelle le polysaccharide-protéine glyquée comprend au moins un résidu protéine de petit-lait et au moins un résidu pullulane, et
dans laquelle l'interface protéique a une épaisseur moyenne de 0,005 à 10,0 *µ*m.
